# EUROPEAN PATENT APPLICATION

(11) **EP 4 847 676 A1**
(43) Date of publication of application: **02.12.2026**
(21) Application number: 26165100.4
(22) Date of filing: 16.03.2026
(51) Int. Cl.: D04H 3/007, D04H 3/14, D04H 3/018, D04H 3/147, D04H 11/00, D04H 13/00, B32B 27/32, B32B 5/26, B32B 5/02, B32B 5/08

(54) **A NON-SLIP BACKING AND A PRODUCTION METHOD THEREOF**

(30) Priority: 27.05.2025 TR 2025006873
(71) Applicant: Karsli, Levent, Gaziantep 27620 (TR)
(72) Inventor: Karsli, Levent, Gaziantep 27620 (TR)
(74) Representative: Cayli, Hülya

(57) **Abstract**

The present invention relates to a non-slip backing for imparting a non-slip effect to a surface-covering article, and to a production method for said backing. Said backing comprises at least a first layer (1) of a spunbond structure that comprises copolymer-containing filaments. Said production method comprises the steps of: obtaining at least one copolymer raw material; converting the obtained raw material into copolymer-containing filaments by a spunbond process; forming a web structure by laying the copolymer-containing filaments onto a conveyor belt; and passing the formed web between two heated metal rollers so as to bond the free filaments to one another and obtain at least a first layer (1) of the backing.

## Description

### Technical Field

The present invention relates to a backing for imparting a non-slip effect to surface-covering articles such as carpets, mats, tablecloths or bedspreads, and to a production method for said backing.

### Background of the Invention

Textile products such as carpets, mats, tablecloths or bedspreads are placed on a surface for use. In particular, if the surface on which the product is placed is a smooth, low-friction surface, said product may slide thereon. Since this may create a safety hazard for users, it is desirable to prevent such products from slipping on the surface.

In prior art applications, backings made of various textile products or of materials such as felt may be incorporated into these surface-covering articles in order to impart a non-slip effect thereto. However, over time, these applications may lead to issues such as deformation of said textile products and materials such as felt. Furthermore, the backings used in these applications are unable to provide sufficient non-slip performance, particularly in humid and wet environments.

### Brief Description of the Invention

The present invention discloses a backing for imparting a non-slip effect to a surface-covering article, and a production method for said backing. Said backing comprises at least a first layer (1) of a spunbond structure comprising copolymer-containing filaments. Said production method comprises the steps of: obtaining at least one copolymer raw material; converting the obtained raw material into copolymer-containing filaments by a spunbond process; forming a web structure by laying the copolymer-containing filaments onto a conveyor belt; and passing the formed web between two heated metal rollers so as to bond the free filaments to one another and obtain at least a first layer (1) of the backing.

In the backing according to the present invention, the spunbond structure of the first layer (1) allows the backing to be manufactured easily. Furthermore, the use of copolymer-containing filaments in the first layer (1) provides the desired non-slip effect. In addition, when the raw material forming the copolymer-containing filaments is selected as a polyolefin such as propylene and ethylene, the recyclable nature of this raw material also renders the backing material recyclable, thereby making the backing material environmentally friendly. Moreover, the use of said raw material gives the backing high mechanical and chemical resistance while maintaining a relatively low weight. Thus, a non-slip effect can be provided without increasing the weight of the surface-covering article to which the backing is bonded.

### Object of the Invention

An object of the present invention is to provide a backing for imparting a non-slip effect to a surface-covering article, and a production method for said backing.

Another object of the present invention is to provide a recyclable and environmentally friendly backing, and a production method for said backing.

Yet another object of the present invention is to provide a low-cost backing, and a production method for said backing.

Still another object of the present invention is to provide a backing with high mechanical and chemical resistance, and a production method for said backing.

A further object of the present invention is to provide a backing with air permeability, and a production method for said backing.

### Description of the Drawings

Exemplary embodiments of the backing according to the present invention are illustrated in the attached drawings, in which:
Figures 1a-1f show cross-sectional and perspective views of different filaments suitable for use in the production of the backing according to the invention.
Figure 2 shows an exploded view of the backing of the invention in a multilayer embodiment.
Figure 3 shows a side cross-sectional view of the backing of the invention in a multilayer embodiment.
Figure 4 shows a side cross-sectional view of a surface-covering article comprising the backing of the invention.

All the parts illustrated in figures are individually assigned a reference numeral and the corresponding terms of these numbers are listed below:

| | |
|---|---|
| First resin | (R1) |
| Second resin | (R2) |
| First layer | (1) |
| Second layer | (2) |
| Third layer | (3) |
| Carrier layer | (4) |
| Pile layer | (5) |

### Detailed Description of the Invention

In order to prevent surface-covering articles such as carpets, mats, tablecloths or bedspreads from slipping on the surface on which they are placed, there is a need for a backing structure that imparts a non-slip effect to said articles. In cases where such backings are made of felt or different textile products, the desired durability and non-slip effect may not be achieved. For this reason, the present invention provides a backing for imparting a non-slip effect to a surface-covering article, as well as a production method for said backing.

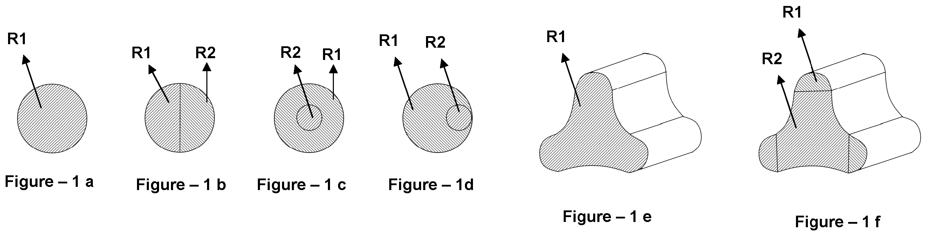

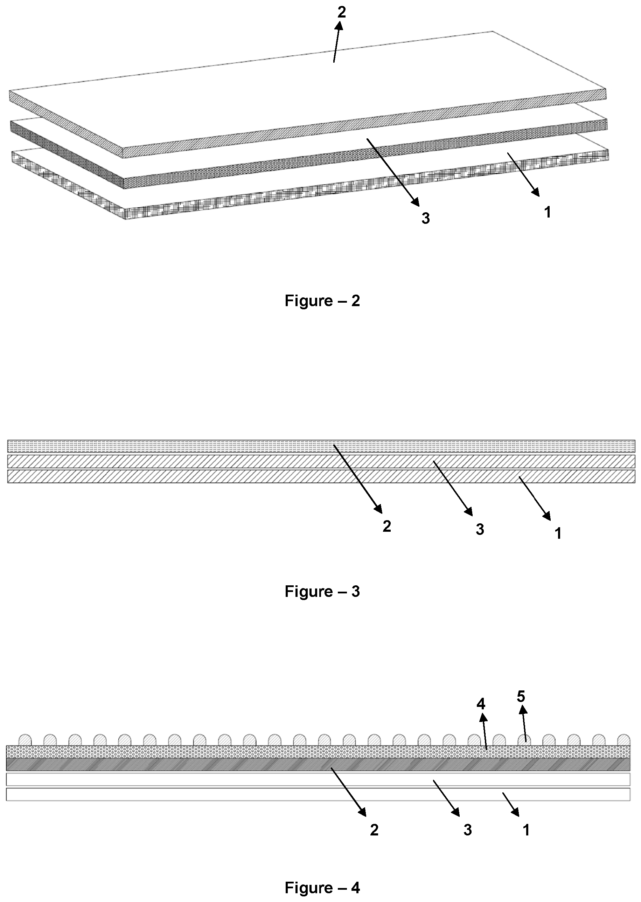

The backing according to the present invention, as illustrated in Figures 1-5, which imparts a non-slip effect to a surface-covering article comprises at least a first layer (1) of a spunbond structure comprising copolymer-containing filaments. The production method of said backing comprises the steps of: obtaining at least one copolymer raw material; converting the obtained raw material into copolymer-containing filaments by a spunbond process; forming a web structure by laying the copolymer-containing filaments onto a conveyor belt; and passing the formed web between two heated metal rollers so as to bond the free filaments to one another and obtain at least a first layer (1) of the backing.

In a preferred embodiment of the invention, said copolymer-containing filaments comprise propylene and ethylene. The copolymer-containing filaments may comprise at least a first resin (R1) comprising propylene and ethylene (for example, in a cylindrical monofilament structure as illustrated in Figure 1a or in a trilobal monofilament structure as illustrated in Figure 1e), or may comprise at least a first resin (R1) comprising propylene and ethylene together with at least a second resin (R2) comprising polypropylene (PP). In an embodiment where the copolymer-containing filaments comprise the first resin (R1) and the second resin (R2), said copolymer-containing filaments may have a side-by-side (s/s) cross-section as shown in Figure 1b, a core/sheath (c/s) cross-section as shown in Figure 1c, an eccentric core/sheath (c/s) cross-section as shown in Figure 1d, or a trilobal cross-section as shown in Figure 1f. In the case of core/sheath (c/s) filaments, the core portion comprises the second resin (R2) and the sheath portion comprises the first resin (R1). Similarly, in the case of eccentric core/sheath (c/s) filaments, the core portion comprises the second resin (R2) and the sheath portion comprises the first resin (R1). In the case of trilobal filaments, the central portion of the filament comprises the second resin (R2), while the lobe tips comprise the first resin (R1). In the case of core/sheath (c/s) filaments or the eccentric core/sheath (c/s) filaments, the weight ratio of the sheath relative to the filament may be in the range of 5-50%.

In another preferred embodiment of the invention, said backing comprises at least a second layer (2) located on the first layer (1) and adapted to be bonded to a surface-covering article. Said second layer (2) is preferably of a spunbond structure comprising polypropylene (PP) filaments. The use of only polypropylene (PP) filaments in the second layer (2) allows the backing to better maintain its form and facilitates easier handling on the production line during bonding of the backing to the surface-covering article. In another preferred embodiment, said backing may further comprise at least a third layer (3) located between the first layer (1) and the second layer (2). Said third layer (3) preferably comprises copolymer-containing filaments. The copolymer-containing filaments used in the first layer (1) and the third layer (3) may be the same or different (for example, in terms of polymer ratios or filament cross-sectional structures). Said third layer (3) may have a spunbond structure or a meltblown structure. In cases where multiple third layers (3) are used, said third layers (3) may differ from one another. Thus, the backing may have layer configurations arranged from top to bottom as SSS, SSSS, SMS, SMMS, SSMMS, SSMMSS or other configurations (where S denotes a spunbond layer and M denotes a meltblown layer).

In another preferred embodiment of the invention, said production method comprises at least one extrusion step prior to the step of converting the obtained raw material into copolymer-containing filaments by a spunbond process. Said extrusion step comprises the steps of melting the obtained raw material, mixing the molten raw material, and filtering the mixture. In this embodiment, the temperature of said melting process is preferably in the range of 225-270°C.

In another preferred embodiment of the invention, in the step of passing the formed web between two heated metal rollers so as to bond the free filaments to one another and obtain at least a first layer (1) of the backing, a temperature of said metal rollers is in the range of 70-180°C. Furthermore, a pressure value applied to the web by means of said metal rollers is in the range of 50-150 daN/cm.

In another preferred embodiment of the invention, said production method comprises a step of mixing the obtained raw material with a dye (for example, a masterbatch) prior to the step of converting the obtained raw material into copolymer-containing filaments by a spunbond process. Thus, the resultant backing can be provided in a desired color.

The present invention also provides a surface-covering article comprising said backing. Said surface-covering article comprises at least one carrier layer (4) to which at least one layer of the backing is bonded. In cases where the surface-covering article is a carpet or a similar product, said surface-covering article may further comprise at least one pile layer (5) located on the carrier layer (4). In such embodiments, a lamination method may be used to bond said backing to the carrier layer (4). As the lamination method, at least one of latex lamination, thermal lamination, or hot-melt adhesive application may be used.

In an exemplary embodiment of the invention, the first resin (R1) is obtained from a raw material source and subjected to an extrusion process. The first resin (R1) and/or the second resin (R2) are then subjected to a spunbond process to form the copolymer-containing filaments. Upon deposition of the copolymer-containing filaments, a web structure is formed, which is subsequently passed between heated rollers (i.e. a calendering process) to obtain a first layer (1). In this calendering process, at least one of the rollers may be a patterned roller. In this way, one surface of the first layer (1) is enabled to have a desired texture. The first layer (1) thus obtained may be used directly as a backing material (for example, by bonding it to the underside of a surface-covering article by a process such as lamination), or a second layer (2) and a third layer (3) may be incorporated onto the first layer (1). In the backing according to the present invention, the spunbond structure of the first layer (1) allows the backing to be manufactured easily. Furthermore, the use of copolymer-containing filaments in the first layer (1) provides the desired non-slip effect. In addition, when the raw material forming the copolymer-containing filaments is selected as a polyolefin such as propylene and ethylene, the recyclable nature of this raw material also renders the backing material recyclable, thereby making the backing material environmentally friendly. Moreover, the use of said raw material gives the backing high mechanical and chemical resistance while maintaining a relatively low weight. Thus, a non-slip effect can be provided without increasing the weight of the surface-covering article to which the backing is bonded.

## Claims

1. A backing for imparting a non-slip effect to a surface-covering article, **characterized by** comprising at least a first layer (1) of a spunbond structure that comprises copolymer-containing filaments.

2. A backing according to claim 1, **characterized in that** said copolymer-containing filaments comprise propylene and ethylene.

3. A backing according to claim 1 or 2, **characterized in that** the copolymer-containing filaments comprise at least a first resin (R1) comprising propylene and ethylene.

4. A backing according to claim 1 or 2, **characterized in that** the copolymer-containing filaments comprise at least a first resin (R1) comprising propylene and ethylene; and at least a second resin (R2) comprising polypropylene.

5. A backing according to claim 4, **characterized in that** said copolymer-containing filaments have a side-by-side filament cross-section.

6. A backing according to claim 4, **characterized in that** said copolymer-containing filaments have a core/sheath filament cross-section or an eccentric core/sheath filament cross-section.

7. A backing according to claim 6, **characterized in that** the core portion comprises the second resin (R2) and the sheath portion comprises the first resin (R1).

8. A backing according to claim 6 or 7, **characterized in that** a weight ratio of the sheath relative to the filament is in the range of 5-50%.

9. A backing according to claim 4, **characterized in that** said copolymer-containing filaments have a trilobal filament cross-section.

10. A backing according to any one of the preceding claims, **characterized in that** it comprises at least a second layer (2) located on the first layer (1) and adapted to be bonded to a surface-covering article.

11. A backing according to claim 10, **characterized in that** the second layer (2) has a spunbond structure comprising polypropylene filaments.

12. A backing according to claim 10 or 11, **characterized in that** it comprises at least a third layer (3) located between the first layer (1) and the second layer (2).

13. A backing according to claim 12, **characterized in that** the third layer (3) comprises copolymer-containing filaments.

14. A surface-covering article comprising a backing according to any one of the preceding claims.

15. A production method for a backing for imparting a non-slip effect to a surface-covering article, **characterized by** comprising the steps of:
- obtaining at least one copolymer raw material;
- converting the obtained raw material into copolymer-containing filaments by a spunbond process;
- forming a web structure by laying the copolymer-containing filaments onto a conveyor belt; and
- passing the formed web between two heated metal rollers so as to bond the free filaments to one another and obtain at least a first layer (1) of the backing.
